# EUROPEAN PATENT APPLICATION

(11) **EP 2 378 626 A1**
(43) Date of publication of application: **19.10.2011**
(21) Application number: 10159821.7
(22) Date of filing: 13.04.2010
(51) Int. Cl.: H02J 9/06

(54) **High reliability dual power sources automatic switch circuit**

(71) Applicant: Eneraiser Technology Co., Ltd., Kaohsiung City (TW)
(72) Inventor: Huang, Jli-Kun, Kaohsiung City (TW)
(74) Representative: 2K Patentanwälte Blasberg Kewitz & Reichel

(57) **Abstract**

A high reliability dual power sources automatic switch circuit is provided. The dual power sources automatic switch circuit includes a main power source circuit (41) and a backup power source circuit (42) installed respectively in a main circuit automatic switch zone (63) and a backup circuit automatic switch zone (64) which are isolated by a main isolation board (61) in the isolation apparatus (6). The main and backup power source circuits (41, 42) include manual switches (412, 422) installed in a manual switch zone (65) isolated by a sub-isolation board (62). The main power source circuit (41) includes a main switch (411) which includes multiple main switch elements (4111) coupled in series. The backup power source circuit (42) includes a backup switch (421) which includes multiple backup switch elements (4211) coupled in parallel. The invention also includes a power monitor module (5) to monitor abnormal conditions of the main and backup power source circuits (41, 42), and control the switch elements (4111, 4211) to perform power supply transfer.

## Description

### FIELD OF THE INVENTION

The present invention relates to a dual power sources power supply transfer switch equipment and particularly to a power source switch circuit.

### BACKGROUND OF THE INVENTION

When abrupt voltage drop occurs, the effective value generally could be lowered to a level between 10% and 90% of the normal value and maintain a period between 0.5 cycle to several seconds. This is one of important issues of electric power quality needed to be properly addressed. While the reliability of power supply system and power supply equipment have been improved constantly, due to many factors such as insulation failure, fire, natural disasters, human operation errors, improper maintenance, inadvertent contact of animals or external objects causing short circuit and other types of malfunction still cannot be totally avoided in the power system. Power source switch equipment also could become dysfunctional due to break down of circuit switch mechanisms. All these could cause deeper and prolonged voltage drop and result in operation interruption of electric equipment, production stop, finance disorder (such as computer crash in financial exchange market), public transportation chaos and the like. People's life could be at risk, and financial market and environments at large could be seriously affected.

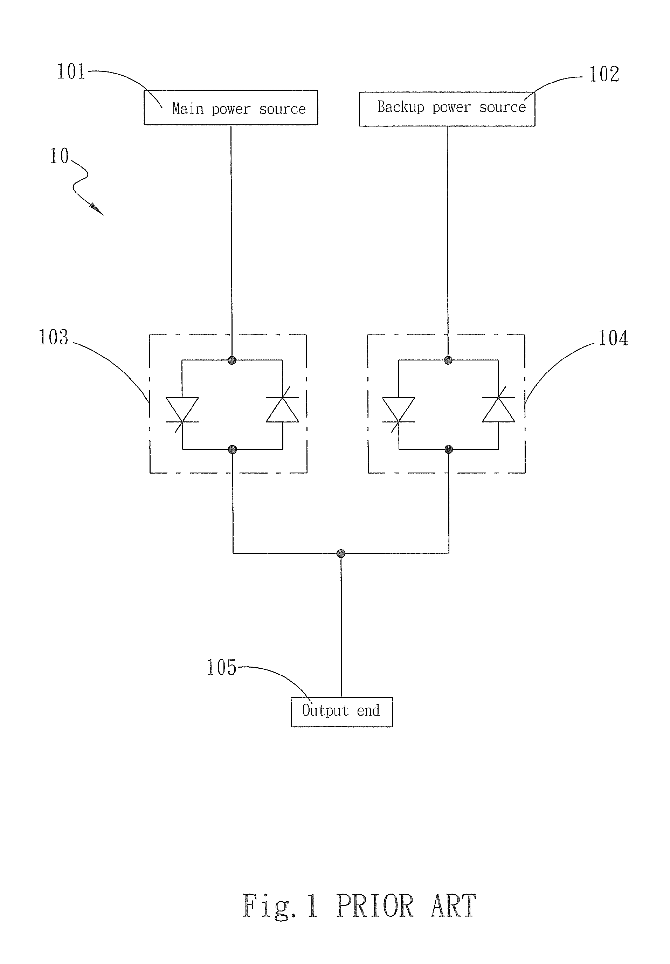

In chapter 4 of IEEE Std 446-1995 Recommended Practice for Emergency and Standby Power Systems for Industrial and Commercial Applications, which is hereby explicitly incorporated for the purpose of disclosure, proposes a power supply method adopted a dual-circuit automatic switch system that includes a solenoid automatic switch equipment to provide emergency power supply transfer. On pages 26-30 of IEEE Std 1250-1995 Guide for Service to Equipment Sensitive to Momentary Voltage Disturbances, which is hereby explicitly incorporated for the purpose of disclosure, proposes a semiconductor (solid state) automatic switch equipment to provide emergency power supply transfer. They aim to maintain operation of most sensitive equipment. Please refer to FIG. 1 for a conventional semiconductor (solid state) automatic switch equipment 10 circuitry. It includes a main power source 101 and a backup power source 102 that are connected respectively to switch elements 103 and 104 to perform switch to carry out power supply transfer. It provides a dual power sources circuit switch function. In the event that the upstream power supply of the main power source 101 is interrupted due to unpredictable incidents and the power system has to be switched to the backup power source 102 to get power supply, the switch element 103 of the main power source 101 has to be switched first to set OFF to isolate the malfunction area of the main power source 101, then the switch element 104 of the backup power source 102 can be set ON to provide power needed. During the power supply switch process, if the switch elements 103 and 104 also become dysfunctional due to failure of driving circuit, switch element or driving power source, such as the switch elements 103 and 104 are not being set ON or OFF properly as desired, the correct power supply transfer cannot be accomplished, then power supply cannot be delivered normally through an output end 105. Such a situation not only creates severe loss, previous invested power supply systems also become a waste. The aforesaid solenoid and semiconductor automatic switch equipment adopts a design of single switch element on both the main power source side and backup power source side, thus malfunction of switch elements could cause problem of power supply transfer switch.

There are many types of UPS systems with varying power supply structures proposed in prior arts, some of the references can be found on pages 151-165 of IEC 62040-3, 1999 Explanation of UPS Switch Definitions and on pages 9-23 of NEMA STANDARDS PUBLICATION NO. PE1-1992 UNINTERRUPTIBLE POWER SYSTEMS, both of which documents are hereby explicitly incorporated for the purpose of disclosure. However, they do not offer much improvement on reliability of switch power source circuit. The conventional switch equipment generally has a switch element respectively on the main power source side and backup power source side. When the upstream power supply system is stopped to supply power due to incidents, and the switch element on the main power source side cannot be switched OFF to fully isolate the upstream power supply system during power supply transfer process or the switch element on the backup power source side cannot be set ON to supply power such that power supply transfer fails and the reliability of the power supply equipment cannot be improved as desired, they could result in disasters or huge loss. Hence it becomes a great challenge to the reliability of total power supply system.

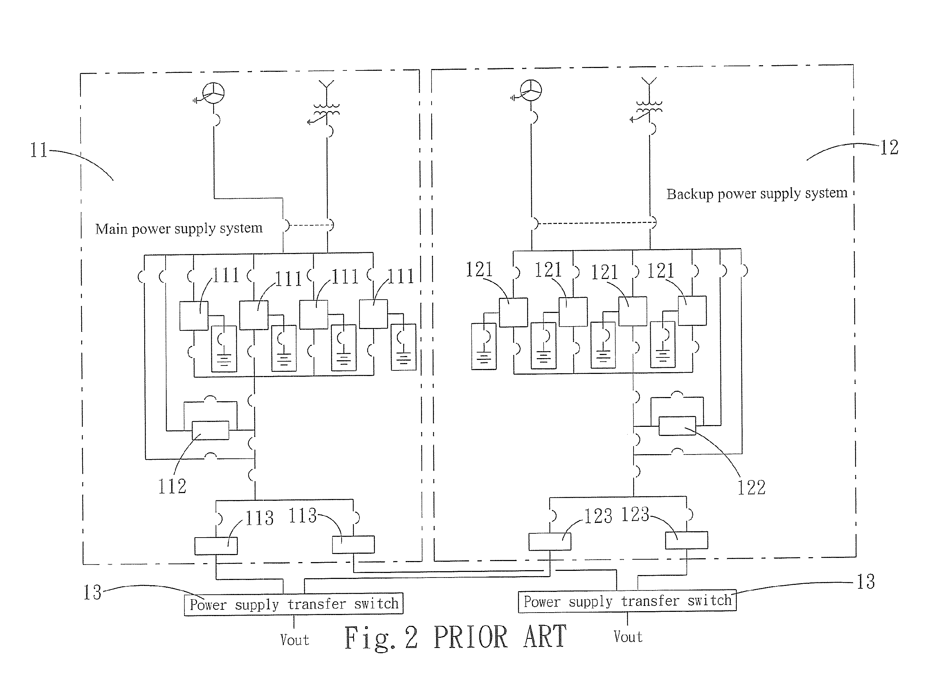

On pages 177-197 of IEEE Std 493-2007 Recommended Practice for the Design of Reliable Industrial and Commercial Power Systems, which is hereby explicitly incorporated for the purpose of disclosure, proposes a design of industrial and commercial power systems that adopts a risk distribution concept of power supply as shown in FIG. 2. It includes a main power supply system 11 and a backup power supply system 12 that are coupled in parallel with a plurality of UPS apparatuses 111 and 121 to supply power. It also has switch elements 112 and 122 be switched to directly supply stable power to downstream electric distributors 113 and 123 in the event that the UPS apparatuses 111 and 121 are malfunctioned to make sure the main power supply system 11 and backup power supply system 12 can continuously supply power. But in the event that the main power supply system 11 is unstable or stops supplying power, it is needed to switch to the backup power supply system 12.If the power supply transfer switch 13 is at single point of failure, all the invested equipment (such as UPS, chargers/rectifiers, generators, batteries, transformers and the like) of the total power supply system cannot function properly. A huge loss could be incurred, and the high reliability power supply design of the main power supply system 11 and backup power supply system 12 becomes meaningless.

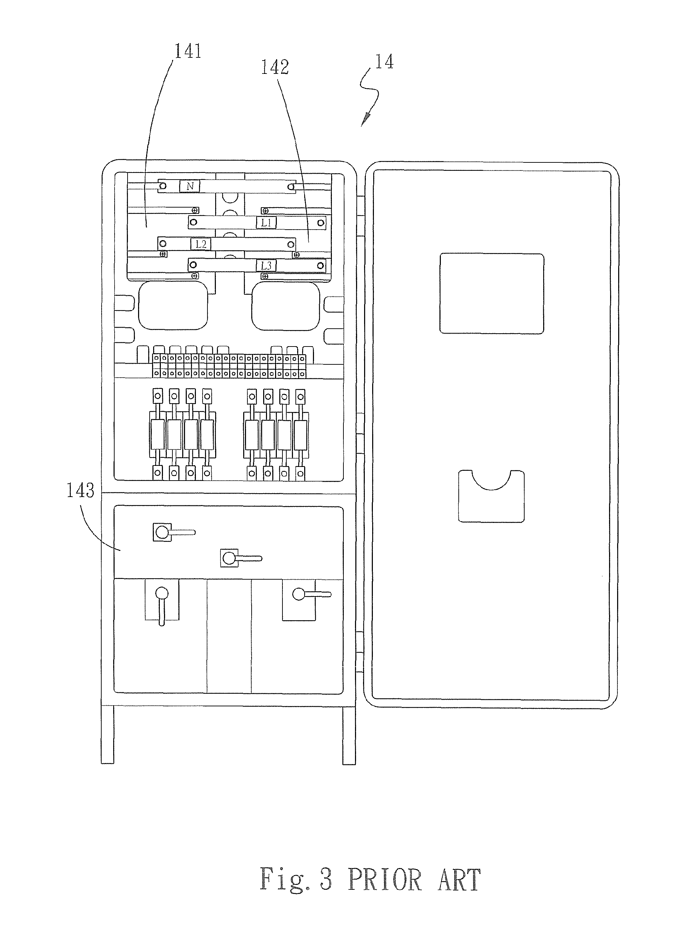

Refer to FIG. 3 for a structure of a conventional dual power sources circuit automatic switch apparatus 14. It includes a power source circuit switch apparatus to switch power supply of a load from one power source to another power source. It the event that the upstream power supply system cannot perform power supply transfer due to power failure and backup power switch failure, it will cause operation interruption of large data centers, stock exchanges, high-tech continuous manufacturing processes, medical systems or navigation systems, huge loss could occur, even human lives are at risk. There are many factors could result in failure of power supply transfer of an automatic switch system, such as malfunction of the main circuit automatic switch zone 141 or backup circuit automatic switch zone 142 in the dual power sources circuit automatic switch apparatus 14 caused by insulation deterioration, overheated temperature, aged element or other unknown reasons that result in breakdown of internal switch elements and other ancillary equipment, bursts or arc sparks that could further cause unstable voltage or power supply interruption at the output end of another circuit causing switch failure of the dual power sources circuit. Similar malfunction affecting a manual switch zone 143 is another factor of switch failure of the dual power sources circuit. Moreover, during test and repair and maintenance of the dual power sources circuit automatic switch apparatus 14, technicians could be exposed to hazards of electric shock that even threatening their lives by mistakenly touching the power source due to limited space or improper spatial design of the apparatus.

However, in the industry, in order to prevent multiple power source circuits installed in a safe and isolated apparatus from damaging or incurring disasters caused by overheated temperature or spread of arc sparks, the conventional isolation apparatus generally includes a single partition to isolate the power source circuit. The single partition can only separate power source circuits of the automatic switch zones of the main and backup circuits, but cannot isolate the automatic switch zones of the main and backup circuits and the manual switch zone. This easily causes contact of another circuit in the power abnormal condition and results in double chain short circuit. It still leaves a lot to be desired in terms of safety isolation. Hence how to develop a high safety and reliability dual power sources circuit automatic switch circuit and isolation apparatus to reduce malfunction caused by external factors or objects, or lower the possibility of chain malfunction caused by failure power supply of related circuit elements or power source switch circuits is an important issue for maintaining industrial power supply quality that is yet to be resolved.

### SUMMARY OF THE INVENTION

The primary object of the present invention is to provide a high reliability dual power sources automatic switch circuit to overcome the problems of the conventional dual power sources automatic switch circuit.

This problem is solved by a high reliability dual power sources automatic switch circuit as claimed by claim 1. Further advantageous embodiments are the subject-matter of the dependent claims.

According to the present invention failure in automatic power supply transfer because of malfunction of switch elements can be reliably prevented. According to the present invention a main power source circuit and a backup power source circuit are effectively isolated through (by means of) the isolation apparatus. Furthermore, according to the present invention another isolation apparatus is positioned below a manual switch zone to thereby facilitate repair and maintenance and thereby provide safe isolation of a power source switch circuit and maintenance tasks.

To achieve the foregoing object, the present invention provides features as follow: the main power source circuit includes a main switch which contains a plurality of main switch elements coupled in series, and the backup power source circuit includes a backup switch which contains a plurality of backup switch elements coupled in parallel. During power supply transfer process, if any one of the main switch elements of the main power source circuit is in OFF condition, the upstream power supply abnormality or short circuit on the main power source circuit can be fully isolated, and if any one of the backup switch elements of the backup power source circuit is in ON condition, the backup power source circuit can supply power. The isolation apparatus includes main isolation boards and a sub-isolation board to form a main circuit automatic switch zone, a backup circuit automatic switch zone and a manual switch zone, and the main circuit automatic switch zone and the backup circuit automatic switch zone respectively hold the main power source circuit and the backup power source circuit. The main isolation boards form an isolation zone between them and have threading holes formed thereon in a up and down and staggered manner to prevent from spreading of wire spark and isolate damage caused by aging and bursting of elements in the dual power sources circuit. The sub-isolation board has wiring holes to connect the manual switch zone with a first, a second and a third manual switches and a bypass maintenance switch of the power source switch circuit. Therefore, during manual repair and maintenance, technicians can be safely isolated. Such a structure also can prevent external objects came from the main circuit automatic switch zone and backup circuit automatic switch zone from dropping into the manual switch zone or touching another circuit to cause double chain short circuit. As a result, safe isolation can be accomplished.

The invention aims to improve the conventional dual power sources automatic switch circuit by coupling a plurality of main switch elements in series in the main power source circuit and coupling a plurality of backup switch elements in parallel in the backup power source circuit and incorporating with a power monitor module which can monitor abnormal voltage and current of power input and output ends of the main power source circuit and backup power source circuit, and also monitor ON condition of the switch and operation temperature thereof to provide desired automatic and safe switch of power supply transfer.

Through the high reliability dual power sources automatic switch circuit provided by the invention, during dual power sources switch process, the main power source circuit must be OFF and the backup power source circuit must be ON to complete power supply switch. The main isolation boards with the isolation zone formed therebetween and the sub-isolation board of the isolation apparatus can isolate malfunction of internal switch elements and ancillary equipment caused by insulation deterioration, overheated temperature, aged element or other unknown reasons, and bursts or arc sparks to affect another circuit or manual switch zone to cause unstable voltage or power supply interruption at the output end, thus can prevent incidents from spreading and provide a safe isolation structure.

As a conclusion, the high reliability dual power sources automatic switch circuit of the invention provide many benefits, notably:
1. There are multiple main switch elements coupled in series in the main power source circuit, if any one of them is OFF, the abnormal power supply or short circuit happened at the upstream main power source circuit can be fully isolated, and there are also multiple backup switch elements coupled in parallel in the backup power source circuit, if any one of them is ON, switch of power supply transfer with the dual power sources can be accomplished.
2. The invention also provides function of monitoring operation temperature of switch elements. In the event that abnormal temperature of the switch elements is detected, circuit switch operation can be executed in advance to avoid affecting normal power supply to the load. The switch elements with abnormal temperature can also be shut down to prevent overheated temperature from causing burst incident.
3. The main isolation board and sub-isolation board in the isolation apparatus are isolated to effectively separate the dual power sources circuits. Moreover, with the manual switches are located in the manual switch zone, power source switch circuit and repair and maintenance task can be separated safely.
4. The invention can effectively enhance reliability of the power supply transfer of the dual power sources to ensure the backup power supply system can supply power in an emergent situation.

The foregoing, as well as additional objects, features and advantages of the invention will be more readily apparent from the following detailed description, which proceeds with reference to the accompanying drawings.

### BRIEF DESCRIPTION OF THE DRAWINGS

FIG. 1 is a circuit diagram of conventional automatic switch equipment.
FIG. 2 is a schematic view showing a conventional multi-UPS and power supply transfer switch system.
FIG. 3 is a front view showing a conventional dual power sources circuit automatic switch apparatus.
FIG. 4 is a schematic view showing system architecture of the invention.
FIG. 5 is a circuit diagram of the dual power sources automatic switch circuit of the invention.
FIG. 6 is an exploded view showing the isolation apparatus of the invention.
FIG. 7 is a front view showing the dual power sources automatic switch circuit installed on the isolation apparatus according to the invention.
FIG. 8 is a schematic view of a first embodiment of the invention.
FIG. 9 is a schematic view of a second embodiment of the invention.
FIG. 10 is a schematic view of a third embodiment of the invention.
FIG. 11 is a schematic view of a fourth embodiment of the invention.
FIG. 12 is a schematic view of a fifth embodiment of the invention.

### DETAILED DESCRIPTION OF THE PREFERRED EMBODIMENTS

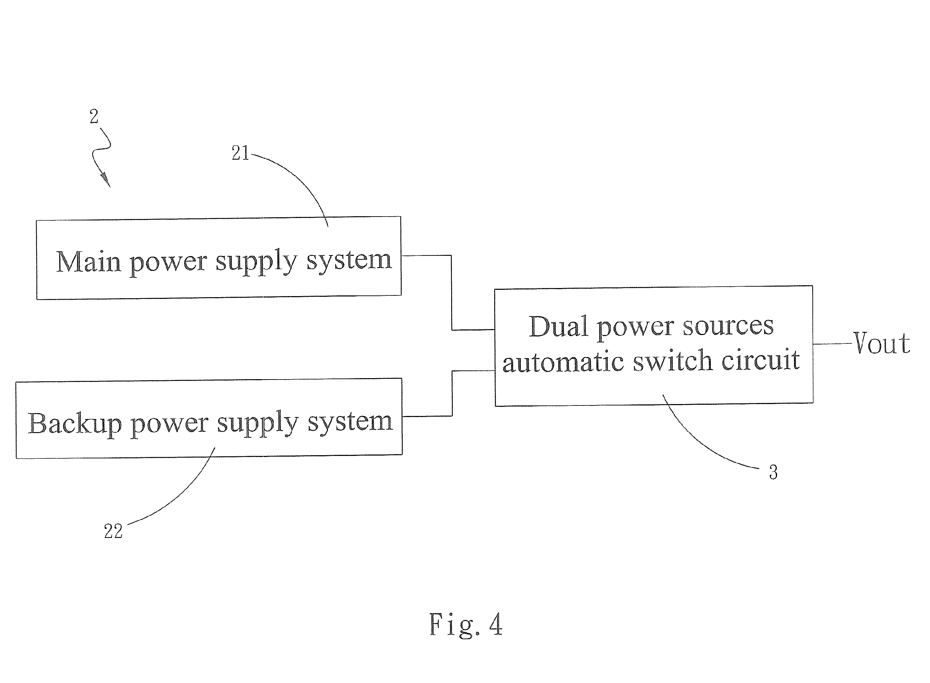

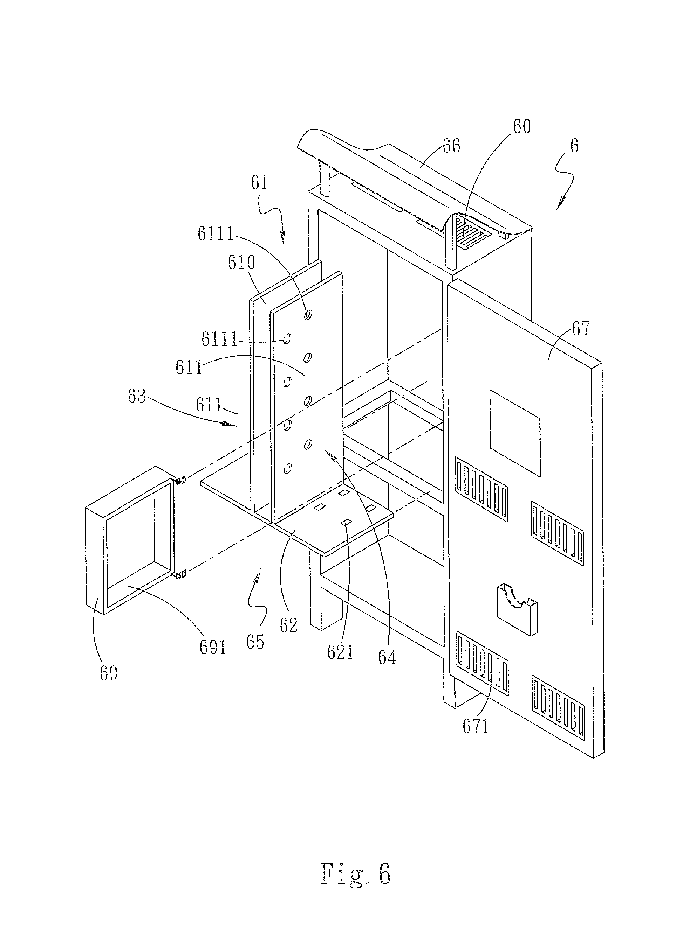

Please refer to FIGS.4 and 6, the present invention aims to provide a dual power sources automatic switch circuit 3 and an isolation apparatus 6 thereof.

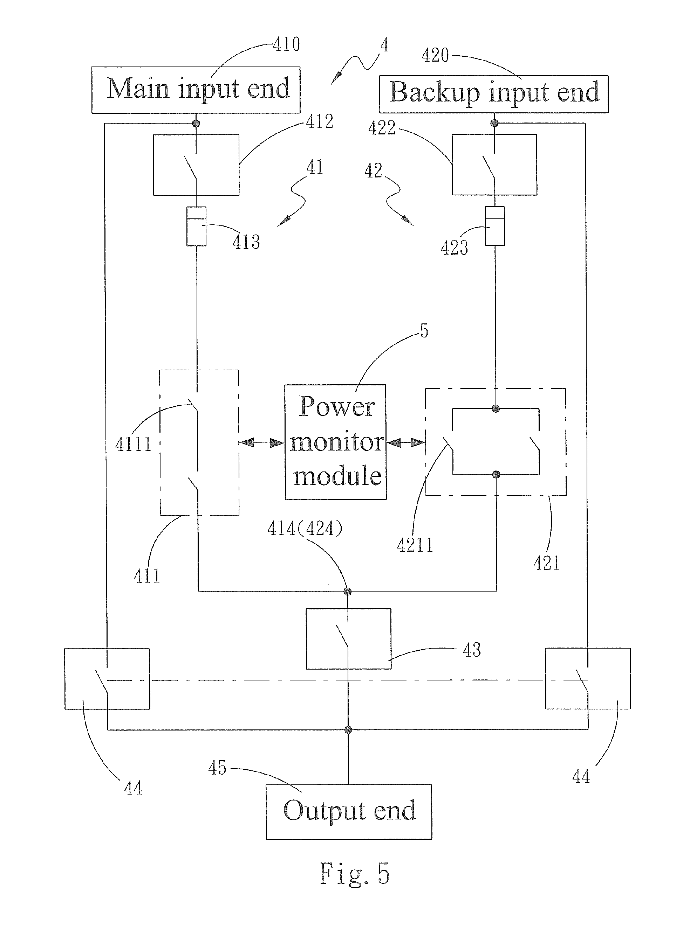

Also referring to FIG. 5, the dual power sources automatic switch circuit 3 comprises a power source switch circuit 4 which includes a main power source circuit 41 and a backup power source circuit 42. The main source power circuit 41 is connected to a main switch 411 which includes a plurality of main switch elements 4111 coupled in series and has a main input end 410, and also a first manual switch 412 and a main fuse set 413 to bridge in this order between the main input end 410 and the main switch 411. The backup power source circuit 42 is connected to a backup switch 421 which includes a plurality of backup switch elements 4211 coupled in parallel and has a backup input end 420, and also a second manual switch 422 and a backup fuse set 423 to bridge in this order between the backup input end 420 and the backup switch 421. The backup power source circuit 42 has a backup output end 424 connecting to a main output end 414 of the main power source circuit 41 to provide power output. There is also a third manual switch 43 located in front of an output end 45 of the power source switch circuit 4. The outputs of the main input end 410, backup input end 420 and third manual switch 43 have respectively a bypass maintenance switch 44 to manually switch the main power source circuit 41 or the backup power source circuit 42 for repair and maintenance purpose. The main and backup switch elements 4111 and 4211 mentioned above can be either electronic type, solenoid type or semiconductor type. The semiconductor type can select either SCR forced-commutated thyristor, gate-turn-off thyristor (GTO), MOS turn-off thyristor (MTO), emitter turn-off thyristor (ETO), integrated gate-commutated thyristor (IGCT), power MOSFETs or IGBTs. The invention also provides a power monitor module 5 to monitor voltage and current of input and output of the power source switch circuit 4 and temperature of the main and backup switches 411 and 421 to determine and control operation of the main switch 411 and backup switch 421, thereby to monitor and control switch of power supply transfer between the main power source circuit 41 and backup power source circuit 42.

Refer to FIG. 6 for the isolation apparatus 6 which aims to hold the dual power sources automatic switch circuit 3. It includes a main isolation board 61, a sub-isolation board 62 and a safety spacer 69.

The main isolation board 61 has corresponding isolation plates 611 interposed by an isolation zone 610. The main isolation board 61 has a main circuit automatic switch zone 63 at one side and a backup circuit automatic switch zone 64 at another side. The isolation plates 611 have respectively a plurality of threading holes 6111 formed in a up and down and a staggered manner for connection between the main circuit automatic switch zone 63 and backup circuit automatic switch zone 64. The sub-isolation board 62 is extended vertically at a lower side of the main isolation board 61 and has a plurality of wiring holes 621 formed thereon for straddle and connection later. A manual switch zone 65 is provided beneath the sub-isolation board 62. The safety spacer 69 is hinged on an inner side of the isolation apparatus 6 and has a holding trough 691. The main isolation board 61 and sub-isolation board 62 can be formed integrally or formed individually and coupled together.

Referring to FIGS. 4 and 5, in the event that the power monitor module 5 detects voltage disturbance or short circuit occurred on a main power supply system 21, and also monitors that a backup power supply system 22 is available and ready to provide power supply transfer to output power, the power monitor module 5 controls and sets the main switch elements 4111 OFF in the main switch 411 of the main power source circuit 41 to fully isolate the main power supply system 21, and also controls and triggers the backup switch elements 4211 ON in the backup switch 421 of the backup power source circuit 42 so that the backup power supply system 22 can continuously output power through the backup power source circuit 42 to complete circuit switch process to attain Break-Before-make principle. Therefore, the output end 45 of the power source switch circuit 4 can continuously provide power output. During the circuit switch process, any one of the main switch elements 4111 in the OFF condition can fully isolate the main power supply system 21. On the other hand, any one of the backup switch elements 4211 in the ON condition enables the backup power supply system 22 to supply power. Thus power supply transfer failure caused by malfunction of the switch elements 4111 and 4211 can be avoided, and reliability and practicality of the power supply system can be greatly enhanced. In the event that the main power supply system 21 and the backup power supply system 22 are coupled in parallel, short circuit happened on the main power supply system 21 or abnormal power supply happened to affect the backup power supply system 22 can also be avoided.

The power monitor module 5 also can monitor the temperature of the main switch elements 4111. In the event that the temperature is abnormal and before the current on the main power source circuit 41 drops to zero, the power monitor module 5 triggers and sets the backup switch elements 4211 ON in the backup power source circuit 42 to rapidly flow current. The power monitor module 5 monitors flow direction of the current, and quickly controls and sets the main switch elements 4111 OFF to achieve Make-Before-Break operation so that the circuit is switched in advance to make sure that normal power supply to the load is not affected by the abnormal condition of the main switch elements 4111, and the main switch elements 4111 that have abnormal temperature also can be shut down to avoid overheated temperature and burst. The power monitor module 5 also can detect slight electric leakage in the main power source circuit 41 to perform Make-Before-Break power supply transfer process to prevent subsequent problems of continuous electric leakage. Moreover, during repair and maintenance operation and switch of the circuit is needed to provide power supply transfer, the backup power source circuit 42 can be set ON first to shut down power supply of the main power source circuit 41 to provide Make-Before-Break power supply transfer process, then switch between the circuits can be executed. In the event that the power monitor module 5 detects malfunction occurred at a downstream output spot of the power source switch circuit 4, no power supply transfer process is executed.

In the event that technicians mistakenly treat the backup power source circuit 42 as the main power supply, the power supply side has to be transferred from the backup power source circuit 42 to the main power source circuit 41, and through the power monitor module 5 performs control and switch, the backup switch elements 4211 are set OFF at the same time to isolate power supply of the backup power supply system 22, and the main switch elements 4111 are set ON at the same time to allow the main power supply system 21 to supply power and to become the main power supply side.

Referring to FIG. 6, a water dripping guard plate 66 is provided above the isolation apparatus 6 to prevent moisture condensation of the surrounding environment and from dripping into the circuit elements of the main circuit automatic switch zone 63 or backup circuit automatic switch zone 64. The upper end surface of the isolation apparatus 6 also may have heat exchange outlets 60 and heat exchange inlets 671 located on a door panel 67 to increase cooling effect of the isolation apparatus 6.

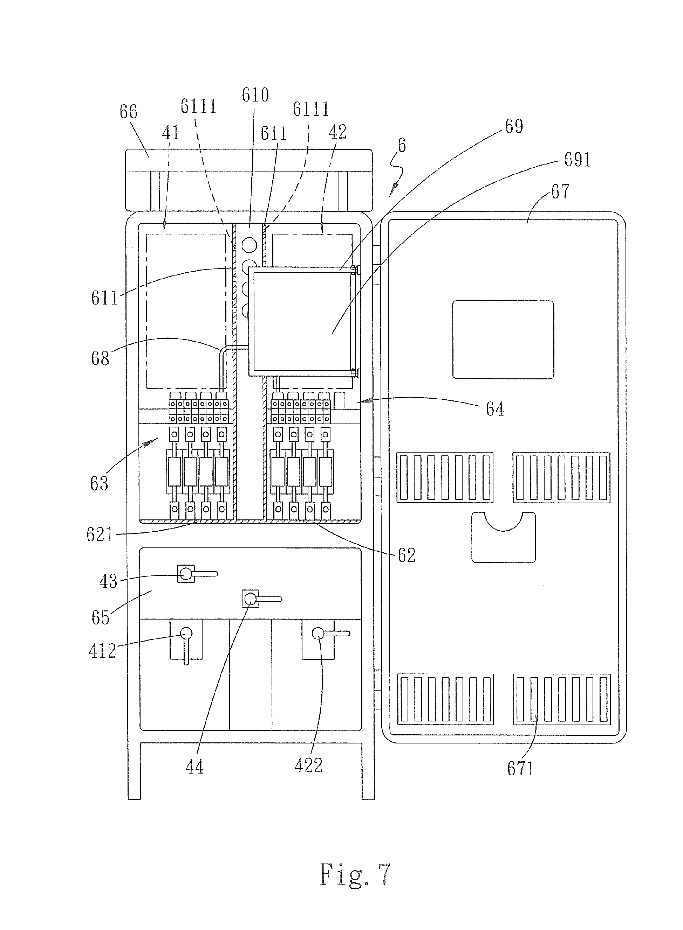

Referring to FIGS. 6 and 7, the main power source circuit 41 and backup power source circuit 42 are installed respectively in the main circuit automatic switch zone 63 and backup circuit automatic switch zone 64 that have corresponding isolation plates 611 spaced by the isolation zone 610 with multiple threading holes 6111 formed thereon in the up and down and the staggered manner for connection of the main power source circuit 41 and backup power source circuit 42. The threading holes 6111 and a connecting power cord 68 form a tight coupling such that no gap is formed between them, thus can prevent spreading of arc sparks. The isolation zone 610 also can block spreading of burning between the power source circuits in the main circuit automatic switch zone 63 and backup circuit automatic switch zone 64. The manual switch zone 65 can hold the first, second and third manual switches 412, 422 and 43 and also the bypass maintenance switch 44 through the wiring holes 621 of the sub-isolation board 62 to provide safe isolation of people during manual switch for repair and maintenance operation. Such a structure also can avert external objects (such as condensed water drops, and explosive substances, iron wires or metal pieces from aged circuit elements, and the like) from the main circuit automatic switch zone 63 and backup circuit automatic switch zone 64 dropping into the manual switch zone 65 or touch another circuit to cause double chain short circuit to achieve safe isolation. The holding trough 691 of the safety spacer 69 aims to hold the power monitor module 5 so that the power monitor module 5 is safely isolated from the power source switch circuit 4 to prevent malfunction of elements in the power source switch circuit 4 from affecting operation of the power monitor module 5.

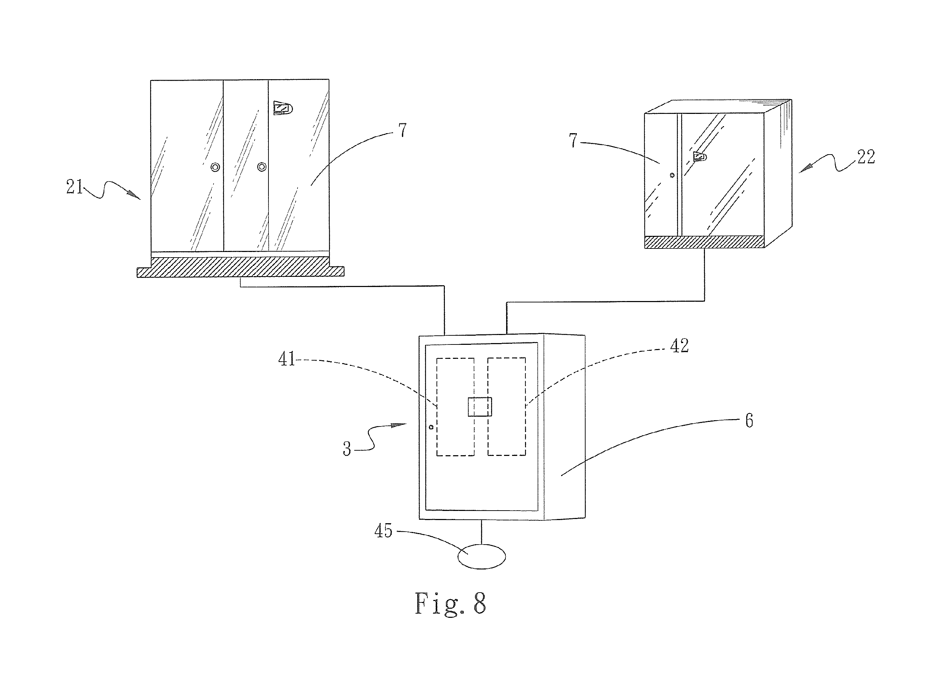

Refer to FIGS. 4, 5 and 8 for a first embodiment of the isolation apparatus 6 which holds the main power source circuit 41 of the power source switch circuit 4 of the dual power sources automatic switch circuit 3 to receive power supply from the main power supply system 21 of an upstream power supply 2. The backup power source circuit 42 receives power supply from the backup power supply system 22. The upstream power supply 2 can provide steady power output through the output end 45 of the power source switch circuit 4. The main power supply system 21 and backup power supply system 22 are respectively an independent static UPS 7 to supply power.

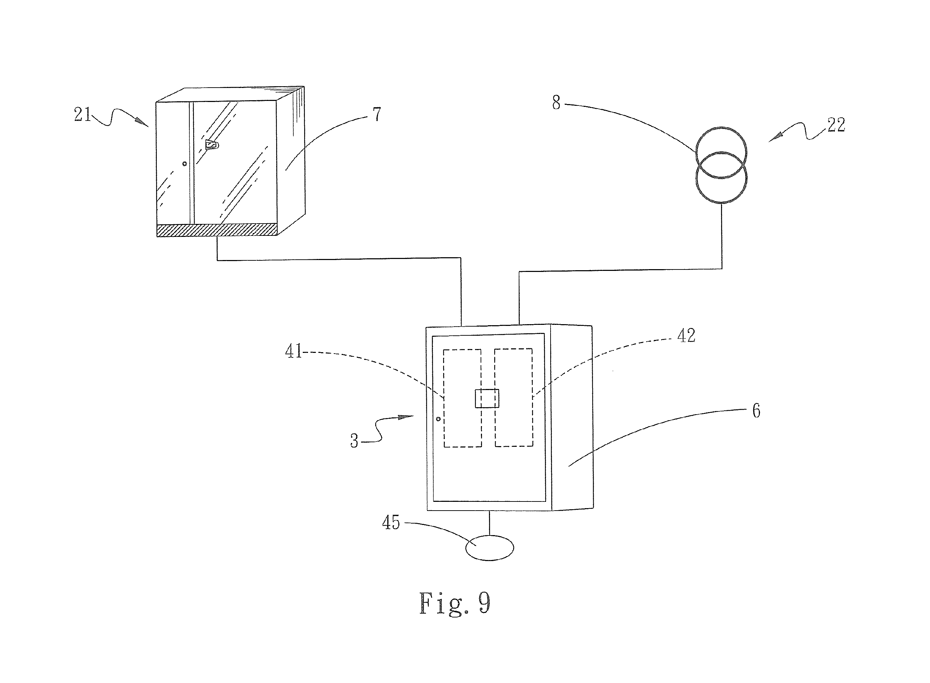

Refer to FIGS. 4, 5 and 9 for a second embodiment of the isolation apparatus 6 which holds the main power source circuit 41 of the dual power sources automatic switch circuit 3 to receive power supply from the main power supply system 21 of an upstream power supply 2. The backup power source circuit 42 receives power supply from the backup power supply system 22. The upstream power supply 2 can provide steady power output through the output end 45 of the power source switch circuit 4. The main power supply system 21 is a static UPS 7 to supply power, while the backup power supply system 22 is ordinary commercial power 8.

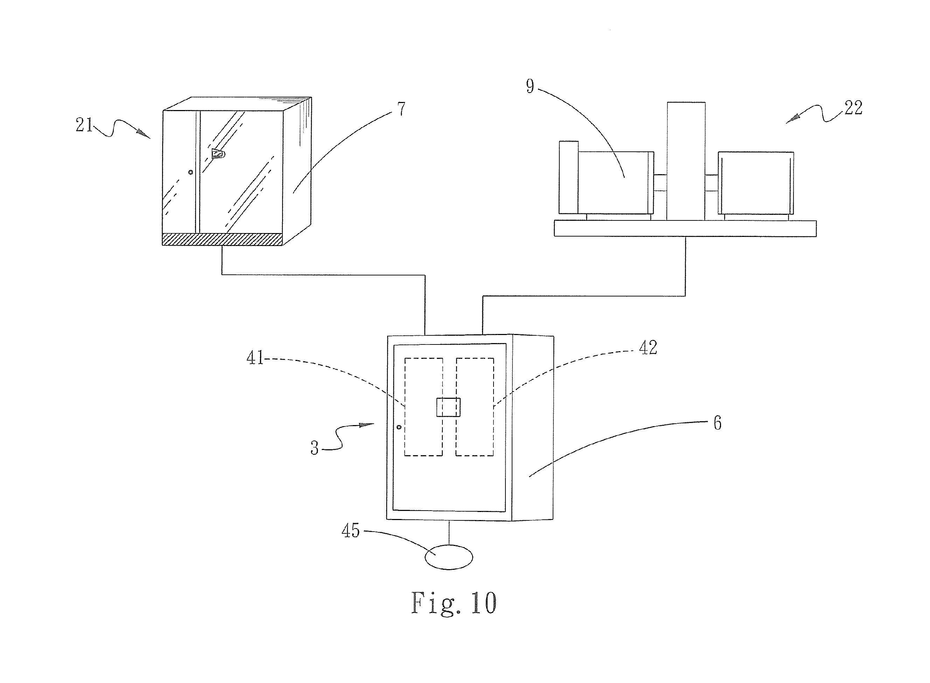

Refer to FIGS. 4, 5 and 10 for a third embodiment of the isolation apparatus 6 which holds the main power source circuit 41 of the dual power sources automatic switch circuit 3 to receive power supply from the main power supply system 21 of an upstream power supply 2. The backup power source circuit 42 receives power supply from the backup power supply system 22. The upstream power supply 2 can provide steady power output through the output end 45 of the power source switch circuit 4. The main powder supply system 21 is a static UPS 7 to supply power. The backup power supply system 22 is a dynamic UPS 9 to provide power for the dual power sources automatic switch circuit 3.

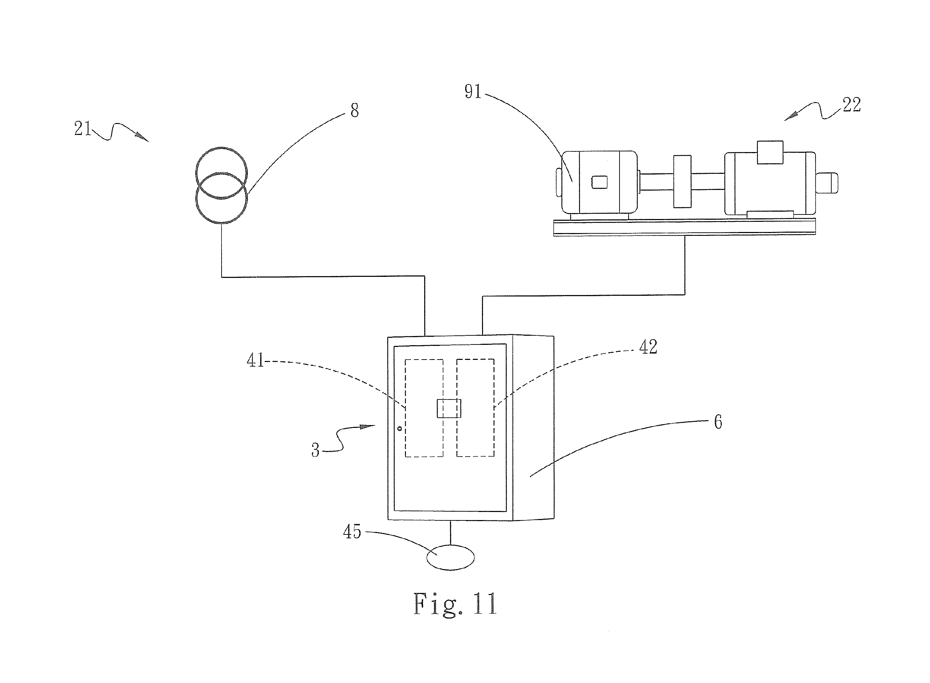

Refer to FIGS. 4, 5 and 11 for a fourth embodiment of the isolation apparatus 6 which holds the main power source circuit 41 of the dual power sources automatic switch circuit 3 to receive power supply from the main power supply system 21 of an upstream power supply 2. The backup power source circuit 42 receives power supply from the backup power supply system 22. The upstream power supply 2 can provide steady power output through the output end 45 of the power source switch circuit 4. The main power supply system 21 is the ordinary commercial power 8. The backup power supply system 22 is an engine generator 91 to provide power for the dual power sources automatic switch circuit 3.

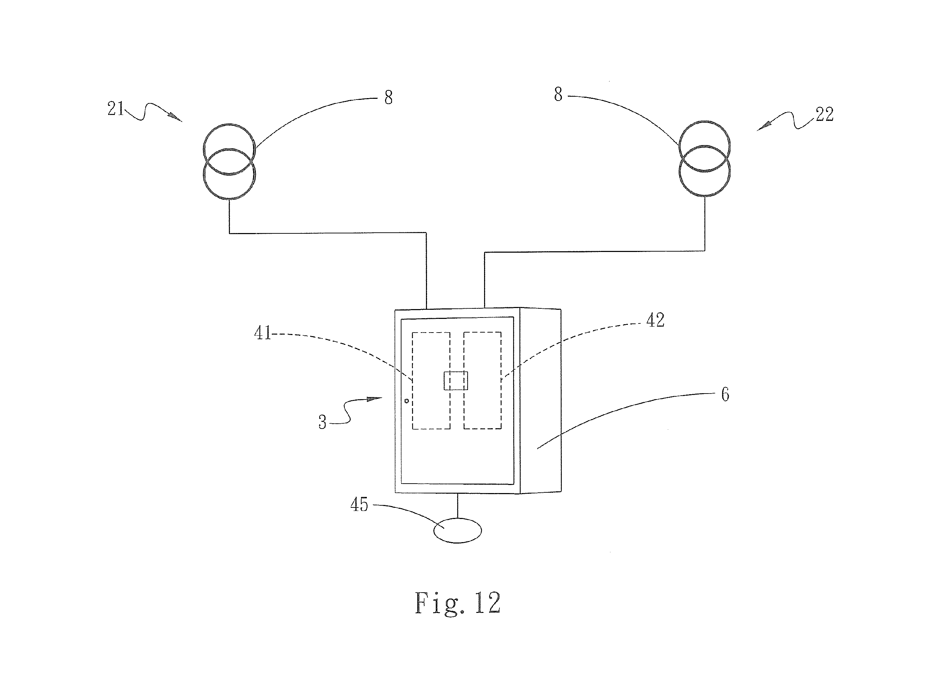

Refer to FIGS. 4, 5 and 12 for a fifth embodiment of the isolation apparatus 6 which holds the main power source circuit 41 of the dual power sources automatic switch circuit 3 to receive power supply from the main power supply system 21 of an upstream power supply 2. The backup power source circuit 42 receives power supply from the backup power supply system 22. The upstream power supply 2 can provide steady power output through the output end 45 of the power source switch circuit 4. The main power supply system 21 and backup power supply system 22 are independent commercial power 8 to provide needed power.

## Claims

1. A high reliability dual power sources automatic switch circuit, **characterized by**:
a power source switch circuit (4) which includes a main power source circuit (41) and a backup power source circuit (42), the main power source circuit (41) being linked to a main switch (411) which includes a plurality of main switch elements (4111) coupled in series; the backup power source circuit (42) being linked to a backup switch (421) which includes a backup output end (424) connecting to a main output end (414) of the main power source circuit (41) to provide power output; and
a power monitor module (5) to monitor voltage and current conditions of power source input and output of the power source switch circuit (4) to determine and control operation of the switches (411, 421) of the main power source circuit (41) and the backup power source circuit (42).

2. The high reliability dual power sources automatic switch circuit of claim 1, wherein the backup switch (421) of the backup power source circuit (42) includes a plurality of backup switch elements (4211) coupled in parallel.

3. The high reliability dual power sources automatic switch circuit of claim 1 or 2, wherein the power monitor module (5) monitors the temperature of the main and backup switches (411, 421).

4. The high reliability dual power sources automatic switch circuit of any of the preceding claims, wherein the main power source circuit (41) includes a main input end (410) which and the main switch (411) being bridged by a first manual switch (412), the backup power source circuit (42) including a backup input end (420) which and the backup switch (421) being bridged by a second manual switch (422), the output of the power source switch circuit (4) including a third manual switch (43) which includes an output end (45), the input ends (410, 420) of the main power source circuit (41) and the backup power source circuit (42) and the output end (45) of the third manual switch (43) being bridged respectively by a bypass maintenance switch (44).

5. The high reliability dual power sources automatic switch circuit of any of the preceding claims, wherein the main and backup switch elements (4111, 4211) are selectively electronic, solenoid or semiconductor types.

## Amended claims

### Amended claims in accordance with Rule 137(2) EPC.

**1.** A high reliability dual power sources automatic switch circuit, comprising:
a power source switch circuit (4) which includes a main power source circuit (41) and a backup power source circuit (42), the main power source circuit (41) being connected to a main switch (411) and having a main output end (414, the backup power source circuit (42) being connectd to a backup switch (421) and having a backup output end (424) connecting to said main output end (414) of the main power source circuit (41) to provide power output; and
a power monitor module (5) to monitor voltage and current conditions of power source input and output of the power source switch circuit (4) to determine and control operation of the switches (411, 421) of the main power source circuit (41) and the backup power source circuit (42); wherein
the backup switch (421) and the main switch (411) each includes a plurality of switch elements (4211, 4111), said switching elements (4211) of said backup switch being coupled in parallel, and
a bypass switch (44) is provided for ach of said main power source circuit (41) and said backup power source circuit (42) to bypass said main and backup power source circuit (41, 42) and switch the main or backup power source circuit,
**characterized in that** the switching elements (4111) of the main switch are coupled in series and that each of said backup switches (44) is manually switchable for repair and maintenance purposes.

**2.** The high reliability dual power sources automatic switch circuit of claim 1, wherein the power monitor module (5) monitors the temperature of the main switch (411) and of the backup switch (421).

**3.** The high reliability dual power sources automatic switch circuit of any of the preceding claims, wherein
the main power source circuit (41) includes a main input end (410) and a first manual switch (412) to bridge between the main input end (410) and the main switch (411),
the backup power source circuit (42) includes a backup input end (420) and a second manual switch (422) to bridge between the backup input end (420) and the backup switch (421),
the output of the power source switch circuit (4) includes a third manual switch (43) which includes an output end (45), and
the input ends (410, 420) of the main power source circuit (41) and the backup power source circuit (42) and the output end (45) of the third manual switch (43) are bridged respectively by said bypass switch (44).

**4.** The high reliability dual power sources automatic switch circuit of any of the preceding claims, wherein the main and backup switch elements (4111, 4211) are selectively electronic, solenoid or semiconductor types.
